# EUROPEAN PATENT SPECIFICATION

(11) **EP 4 413 632 B1**
(45) Date of publication and mention of the grant of the patent: **02.07.2025**
(21) Application number: 22798191.7
(22) Date of filing: 07.10.2022
(51) Int. Cl.: H01M 12/06

(54) **AIR-ZINC FUEL CELL**
LUFT-ZINK-BRENNSTOFFZELLE
PILE À COMBUSTIBLE ZINC-AIR

(30) Priority: 07.10.2021 IT 202100025649
(43) Date of publication of application: 14.08.2024
(73) Proprietor: Ceflux S.r.l., 65022 Bussi sul Tirino PE (IT)
(72) Inventor: DE RISI, Arturo, 73100 Lecce LE (IT); MILANESE, Marco, 73010 Arnesano LE (IT)
(74) Representative: Santoro, Sofia
(86) International application number: PCT/IB2022/059588
(87) International publication number: WO 2023/057967

(56) References cited:
- KR-B1- 101 010 235
- KR-B1- 101 010 235
- US-A- 3 666 561
- US-A- 4 842 963
- US-A- 5 849 427
- US-B1- 6 296 958

## Description

### Technical scope of the invention

The present invention relates to a zinc-air fuel cell with a bed configuration, in particular with a boiling fluidised bed configuration.

### State of the art

Fuel cells are electrochemical devices that directly convert chemical energy into electrical energy using only an electrochemical reaction, without any thermal combustion process. The basic structure of fuel cells comprises an anode, a cathode and a layer of electrolyte interposed between the anode and cathode.

Fuel cells have a significant advantage over standard batteries in that they do not need to be recharged, they only need to be powered, and thus can generate energy incessantly as long as fuel is supplied. Furthermore, the energy densities achievable with fuel cells are typically higher than those of standard batteries.

Various metals such as Li, Mg, Ca, Zn, Al and Fe can be used to make metal-air fuel cells. Of these metals, zinc is considered among the best, as it allows cells with very high energy density values, in the order of 1350 Wh/kg.

A zinc-air fuel cell, commonly known by the acronym ZAFC (from the acronym for "Zinc-Air Fuel Cell"), produces electricity from the reaction between zinc and oxygen in an alkaline liquid electrolyte (pH = 14). It represents an efficient and completely renewable alternative energy generator, as well as being cheap to produce as it does not require expensive metal catalysts.

The operating principle of a zinc-air fuel cell is as follows. When air (or any other source of oxygen) is supplied to the cathode, the oxygen (O₂) it contains is reduced by an electrochemical reaction to hydroxide ions (OH⁻) by reacting with water on the cathode surface. At the same time, oxidation of zinc takes place on the surface of the anode current collector, as zinc is converted to zinc oxide (ZnO) by reacting with the hydroxide ions. As zinc is converted to zinc oxide, electrons are discharged and transferred to the anodic current collector. The electrons on the anode current collector pass through the external load and return to the cathode current collector, where oxygen reduction takes place. The electrolyte is used for charge transfer between the positive and negative electrodes within the cell.

Zinc-air fuel cells can be classified into two main types, namely plate cells and bed cells. In the first case, the cells comprise zinc plates, which must be replaced and regenerated after the discharge process.

In the second case, the cells use aqueous electrolytes flowing through a bed of zinc particles, which in turn corrode and are discharged. The advantage of using a bed of zinc particles is that zinc particles have larger surface areas (for reaction) than zinc plates. In addition, the zinc ions (Zn(OH)₄²) produced by the reaction of the zinc particles can be washed away by the flowing electrolyte, so that the reaction equilibrium is maintained. In cells with a so-called fixed or packed bed, the layer of zinc oxide which tends to form on the surface of each particle (due to the chemical reactions occurring during normal cell operation) causes a significant reduction in cell efficiency over time. It is important to point out that in fixed-bed or packed cells that involve slow movement of the zinc particles (e.g., for loading and unloading of the particles) there is still a reduction in efficiency over time, since the forces acting on the particles, which move at low speed, are not such as to erode the oxide layer on the surface.

US5849427 describes a zinc-air fuel cell of the packed-bed type, which is characterised by a sloping bottom that favours the movement of the zinc particles. However, the slow movement of the zinc particles is unable to erode the zinc oxide layer that forms on the surface of the zinc particles over time.

Furthermore, two different loading and unloading modes of the zinc particles are described in that prior art document, which require a reversal of the flow of electrolyte and therefore do not allow for the continuous operation of the cell, with the consequence of causing interruptions in the supply of electricity produced by the cell.

### Summary of the invention

It is a purpose of the present invention to propose a zinc-air fuel cell of the bed type, which is able to overcome the drawbacks of the state of the art highlighted above. A further purpose of the present invention is to propose a zinc-air fuel cell of the bed type, which is capable of maintaining maximum efficiency for a longer time than cells according to the state of the art.

These and other purposes are fully achieved according to the present invention by means of a zinc-air fuel cell as defined in the appended independent claim 1.

Further advantageous aspects of the zinc-air fuel cell according to the invention form the subject matter of the dependent claims, the contents of which are to be understood as an integral part of the present description.

In summary, the invention is based on the idea of providing an electrolyte supply system configured to ensure a uniform flow of electrolyte within the cell, capable of involving all zinc particles in the reaction taking place within the cell, thereby maximising the generation of electrical energy while producing a mutual erosive action between the particles, so as to avoid the formation of a surface layer of zinc oxide. More specifically, the at least two inlet conduits through which the electrolyte is fed to the cell are arranged coaxially to each other on a pair of opposite faces of the main body of the cell and below a bottom wall of the chamber of the main body of the cell, and furthermore the main body of the cell has a plurality of diffuser channels communicating with the inlet conduits and flowing at said bottom wall to diffuse the electrolyte fed to the cell through the inlet conduits into the chamber. In this way, a boiling fluidised bed cell is obtained, i.e., with turbulent motion of the electrolyte within the cell chamber. This provides the following advantages over the state of the art discussed above:
- causing continuous rubbing of the zinc particles against each other, so as to erode the zinc oxide layer that forms on the surface of the particles during normal operation and thus maintain high levels of cell efficiency over time;
- avoiding the formation of clusters throughout the volume of the cell occupied by the zinc particles due to the formation of zinc oxides which have a binding action between the particles themselves, thanks to a more effective disintegrating action than that obtainable with a cell as described in US5849427; and
- ensuring a continuous exchange of zinc particles (consumed and eroded during normal operation of the cell) due to the hydrodynamic entrainment produced by the flow of electrolyte.

Preferably, the cell is provided with electrolyte feeding means configured to control the flow rate of electrolyte, so as to allow selection of the particle size of the zinc particles within the cell, removing the smallest particles, which are dragged away by the flow to be continuously regenerated.

Preferably, the diffuser channels, particularly those in the central area of the bottom wall, have variable diameters. This makes it possible, thanks also to the fact that a layer of inert material spheres, in particular zirconia, can be provided on this bottom wall, to break up the flow of electrolyte entering the chamber, thus preventing the formation of preferential paths within the bed of zinc particles in the chamber and thus the formation of stagnation zones for the electrolyte and zinc particles within the chamber itself. This guarantees the exchange of the spent electrolyte and zinc particles, as well as the uniform distribution of the flow of electrolyte into the cell and consumption of the zinc particles, thus ensuring the stability of the bed even with particles of up to 10 microns in diameter and thus greater cell efficiency.

As will be evident from the following detailed description, equipping the cell with a pair of inlet ducts arranged coaxially to each other below a bottom wall of the main body of the cell and, preferably, providing diffuser ducts of different diameters from each other, particularly in the direction of the length of the bottom wall, makes it possible to optimise the operation of the bed, ensuring the erosion of the surface layer of zinc oxide, transporting the smallest particles consumed during cell operation and thus maximising the generation of electricity over time.

### Brief description of the figures

Further features and advantages of the present invention will become clearer from the following description, which is made purely by way of example and not limitation, with reference to the accompanying drawings in which:
- figure 1 is an exploded perspective view of a zinc-air fuel cell according to one embodiment of the present invention;
- figure 2 is a perspective view of the central body of the fuel cell of figure 1;
- figure 3 is a longitudinal sectional view of the central body of figure 2;
- figure 4 is a cross-sectional view of a cell stack comprising six fuel cells according to the present invention;
- figure 5 schematically shows the application of a fuel cell according to the present invention in a plant provided with a zinc and electrolyte regeneration system;
- figure 6 is a photograph of a fuel cell according to the present invention in operation;
- figure 7 shows an SEM magnification of zinc particles sampled during operation of a cell according to the present invention; and
- figure 8 is a graph showing the variation in diameter of spent zinc particles transported as a function of electrolyte flow in a cell according to the present invention.

### Detailed description

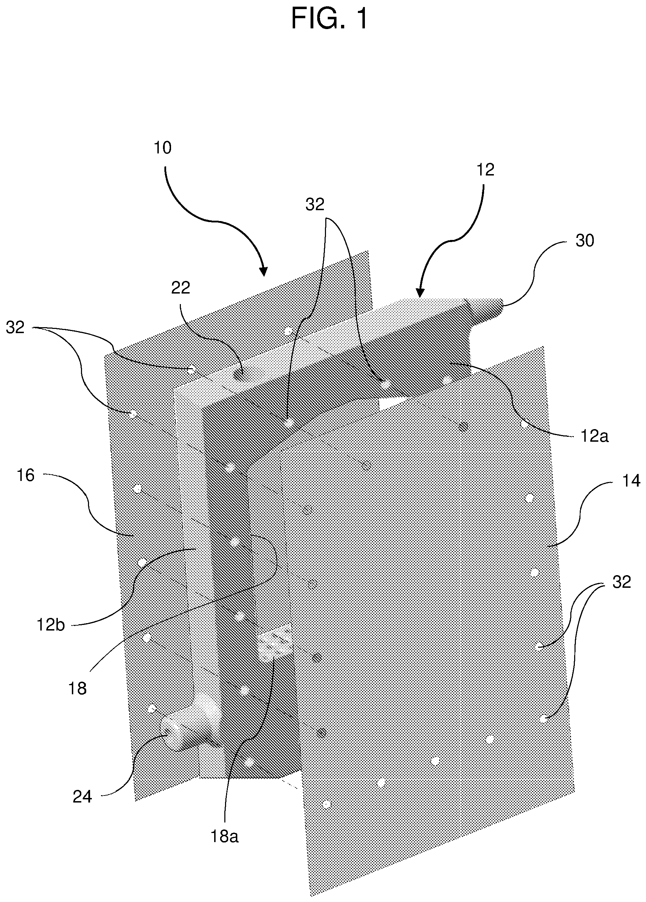

With reference initially to figure 1, a zinc-air fuel cell of the fluidised bed type, in particular a boiling fluidised bed, (hereafter, for simplicity, referred to only as "cell") according to an embodiment of the present invention is collectively referred to as 10 and basically comprises a main body 12 and a pair of plates (electrodes) 14 and 16, anode and cathode plate respectively.

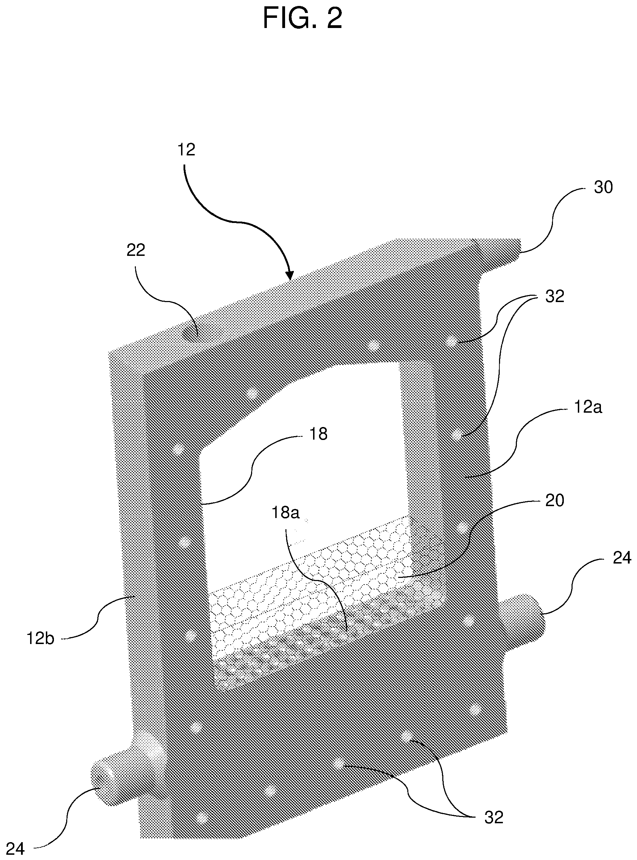

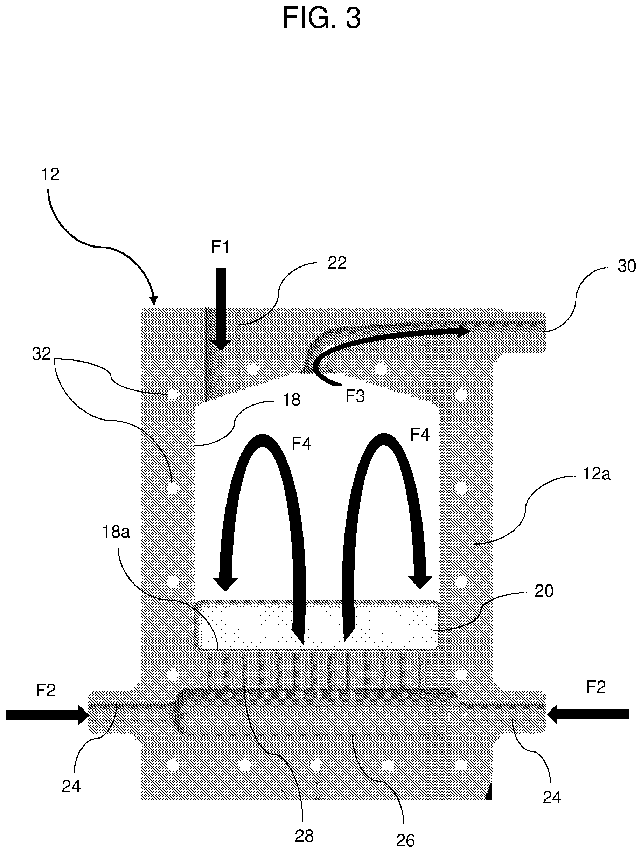

With reference also to figures 2 and 3, the main body 12 is a body having a general conformation of a substantially parallelepiped shape, with one of the three dimensions (thickness) being significantly smaller than the other two (height and width). The main body 12 has a pair of opposite first faces 12a, substantially flat and parallel to each other, on which the anode plate 14 and the cathode plate 16 are fixed respectively. The main body 12 has a chamber 18 extending through the entire thickness of the body itself, which is intended to be supplied with an electrolyte (e.g., a solution of water and potassium hydroxide) and zinc particles. On a substantially flat and horizontally extending bottom wall 18a of the chamber 18 a layer 20 of spheres of inert material, for example zirconia, is preferably arranged.

The main body 12 is provided at the top with a feeding conduit 22 through which zinc particles are fed into the interior of the chamber 18, as indicated by arrow F1 in figure 3, to replenish particles that have been consumed during operation of the cell 10. The feeding conduit 22 preferably extends along a substantially vertical direction.

Furthermore, the main body 12 is provided inferiorly, in particular below the bottom wall 18a of the chamber 18, with several inlet conduits 24, in particular (as in the illustrative embodiment proposed herein) a pair of inlet conduits 24, through which the electrolyte is fed to the cell 10, as indicated with arrows F2 in figure 3. The inlet conduits 24 are arranged on a pair of opposite second faces 12b of the main body 12, substantially flat and perpendicular to the aforementioned first faces 12a. Furthermore, the inlet conduits 24 are advantageously arranged coaxially to each other, along a substantially horizontal direction, so as to promote an even distribution of the electrolyte flow.

The bottom wall 18a is preferably horizontal, thus oriented parallel to the inlet conduits 24, which allows a higher entrainment action by the electrolyte on the zinc particles than in the case of a bottom wall inclined with respect to the horizontal.

The inlet conduits 24 are in fluid communication with a manifold 26 disposed below the bottom wall 18a of the chamber 18 of the main body 12. In turn, the manifold 26 is in fluid communication with the chamber 18 of the main body 12 through a plurality of diffuser channels 28 which flow at the bottom wall 18a of the chamber 18 and preferably extend substantially perpendicular to said wall. According to an embodiment, the diffuser channels 28 have different diameters from each other: in particular, the diffuser channels 28 located in the central area of the bottom wall 18a have diameters varying in the direction of the length of the bottom wall itself, i.e. in the direction of the length of the manifold 26, so as to appropriately balance the flow of electrolyte entering the interior of the chamber 18.

The main body 12 is also provided at the top (thus on the same side as the feeding conduit 22) with a discharge conduit 30 through which the electrolyte and zinc particles consumed during the operation of the cell 10 can flow out of the chamber 18, as shown by arrow F3 in figure 3. In the illustrative embodiment proposed herein, the discharge conduit 30 flows outwards at one of the second faces 12b of the main body 12, but could alternatively also flow out at the upper face (indicated by 12c) of said body.

In this way, the electrolyte is continuously fed to the cell 10 through the inlet conduits 24, flowing in order along the collector 26, along the diffuser channels 28 and through the layer 20 of inert material spheres, and finally discharged from the cell through the discharge conduit 30. In this regard, it should be noted that the layer 20 of spheres of inert material placed on the bottom wall 18a, thus immediately above the outlet of the diffuser channels 28, allows the flow of electrolyte flowing into the chamber 18 to be disrupted, thus preventing the formation of preferential paths within the bed of zinc particles in the chamber 18 and thus the formation of stagnation zones of the electrolyte and zinc particles within the chamber 18. This ensures the replacement of the spent electrolyte, the erosion of the surface layer of zinc oxide on all particles, the transport of the smaller particles consumed during the operation of the cell, guaranteeing the continuity of electrical production during all phases of operation of the cell and thus maintaining the high efficiency of the cell 10 over time. Moreover, due to the fact that the electrolyte escaping from the chamber 18 through the discharge conduit 30 drags with it the smaller zinc particles consumed during the operation of the cell 10, a continuous and effective zinc exchange is ensured, as the exhausted particles are expelled through the discharge conduit 30, while new particles are charged through the feeding conduit 22. Furthermore, the particular configuration of the electrolyte feed system, with the two inlet conduits 24 arranged aligned with each other and from opposite sides of the main body 12 and, preferably, also with diffuser channels 26 of different diameters, allows for a turbulent-type motion of the electrolyte within the chamber 18 (as shown with arrows F4 in figure 3). This ensures a uniform flow of the electrolyte within the cell, capable of involving all the zinc particles in the reaction taking place within the cell, thus maximising the generation of electrical energy. In addition, this allows the eroded zinc particles to be fluid dynamically discharged as they decrease in weight to the point where they can be dragged away by the electrolyte flowing through the cell.

As shown in figure 1, the main body 12, as well as the anode plate 14 and the cathode plate 16, have a plurality of through-holes 32 aligned with each other, through which mechanical fasteners (not shown), e.g. screw-type fasteners, are inserted for fastening the anode plate 14 to the main body 12 on one side and the cathode plate 16 to the main body 12 on the other side.

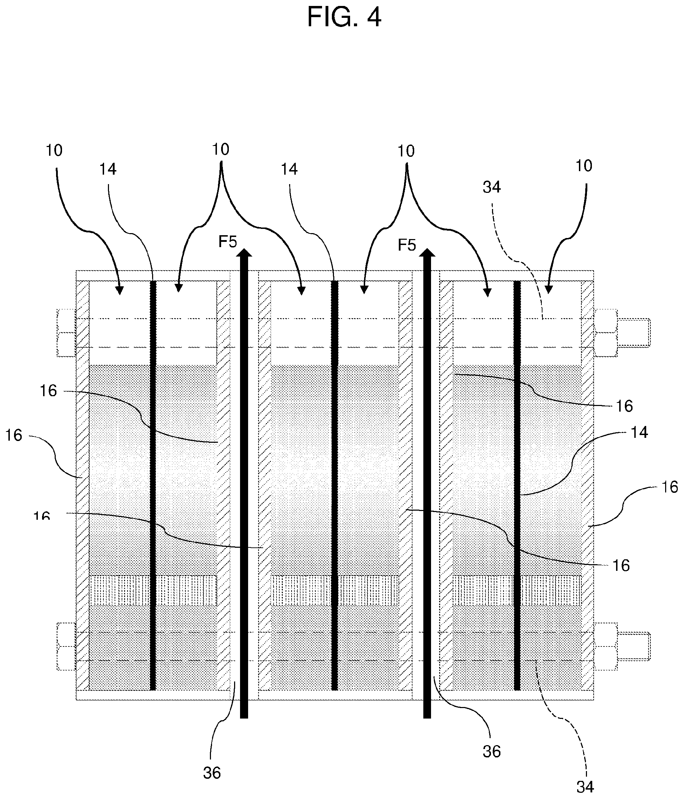

As shown in figure 4, the through-holes 32 also allow a plurality of cells 10 to be connected in series with each other to form a cell pack using screws 34 of suitable length. In the example of figure 4, the cell pack comprises six cells, but of course any number of cells can be connected in series. Preferably, cells are connected in groups of two, so that each group of two adjacent cells shares the same anode plate 14 (made of copper or another conductive material). Furthermore, in the case where the cell pack comprises more than one group of two cells, the cathode plates 16 of adjacent groups of cells are juxtaposed over the same air channel 36 so as to promote air exchange by exploiting the principle of thermal convection within the air channel 36 due to heating of the cells during operation (as shown by means of arrows F5). Alternatively, the air flow can be provided by a pressurised forced circulation system.

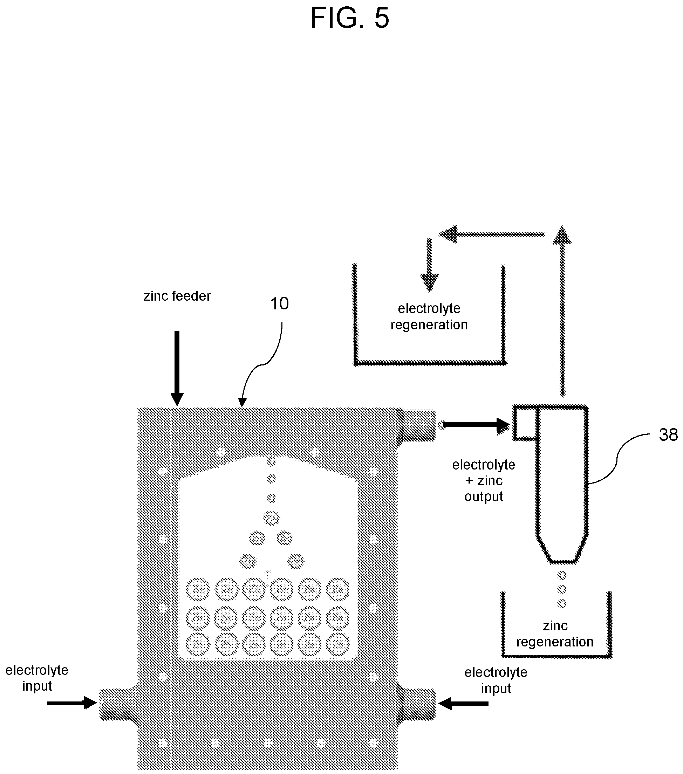

With reference to figure 5, the cell 10 according to the invention may be associated with a zinc and electrolyte regeneration system comprising a separator device 38 (such as, for example, a hydrocyclone, a centrifuge or a sedimentator) capable of separating the zinc particles from the electrolyte. Both the zinc particles and the electrolyte thus recovered are then subjected to appropriate regeneration treatments, which for example for the electrolyte may be chemical treatments (reduction of oxidised substances) and/or physical treatments (filtration). The regenerated zinc particles and the regenerated electrolyte are then returned to the cell 10 through the feeding conduit 22 and the inlet conduits 24, respectively.

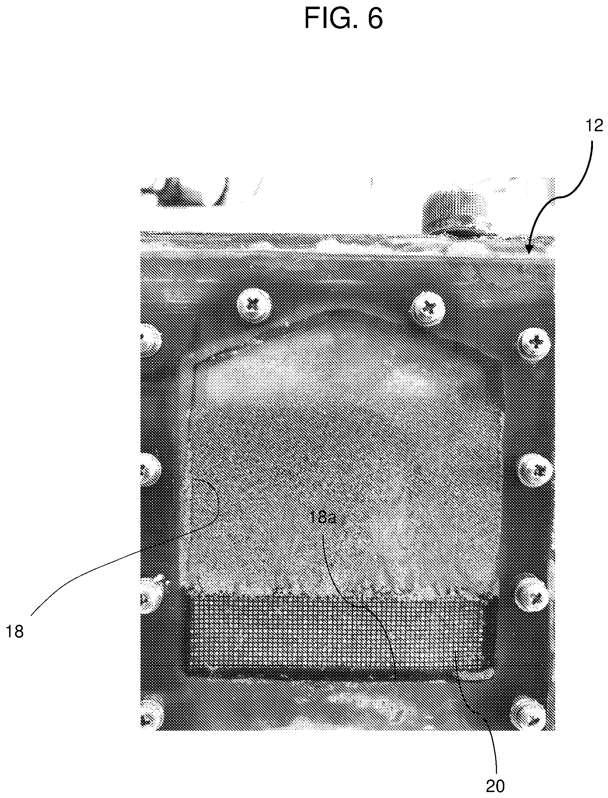

From the observation of figure 6, the formation of swirling motions within the bed due to the flow of electrolyte, as well as the absence of preferential paths within the bed, is evident. These motions, dragging the zinc particles, allow erosion of the surface layer of zinc oxide, maximising the generation of electrical energy over time by the cell. At the top of the bed, one can see the dragging of the spent particles with a very small diameter out of the bed for subsequent separation and regeneration.

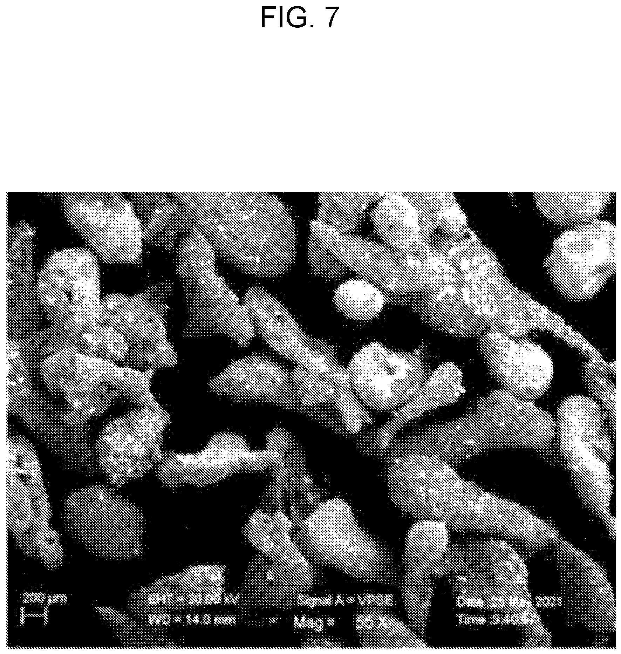

It can be seen from the image in figure 7 that the presence of zinc oxides (light areas on the surface of the particles) is extremely limited and does not extend over the entire surface.

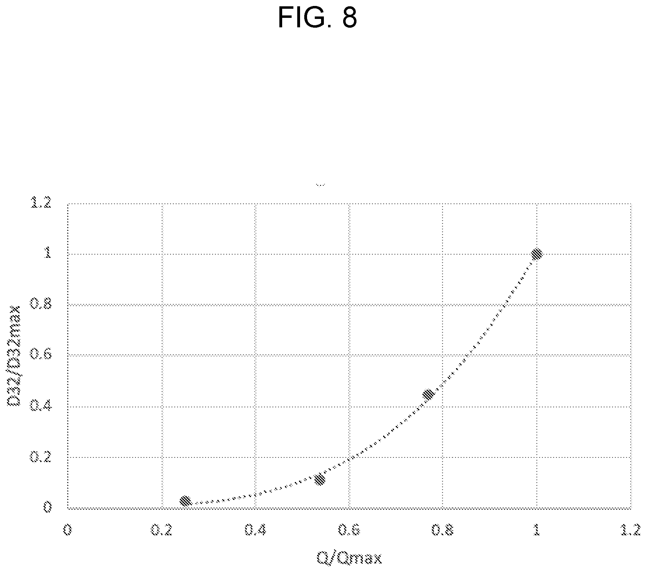

Finally, the graph in figure 8 demonstrates that there is an unambiguous correlation between the flow rate and the diameter of the particles removed, which makes it possible to define the optimum particle size for regeneration.

The present invention has so far been described with reference to preferred embodiments. It is to be understood that other embodiments pertaining to the same inventive core may be contemplated, all of which fall within the scope of protection as defined by the claims reported below.

## Claims

1. A zinc-air fuel cell of the fluidised bed type, comprising a main body (12) and a pair of electrode plates (14, 16), anode and cathode respectively, fixed to a pair of opposite first faces (12a) of the main body (12),
in which the main body (12) encloses a chamber (18) suitable to be fed with an electrolyte and with zinc particles, said chamber (18) having a bottom wall (18a)
wherein the main body (12) is provided with at least one feeding conduit (22) for feeding the zinc particles to the cell (10), at least two inlet conduits (24) for feeding the electrolyte to the cell (10), and at least one discharge conduit (30) for discharging from the cell (10) the electrolyte and zinc particles consumed during operation of the cell (10),
wherein said at least two inlet conduits (24) are arranged coaxially to each other on a pair of opposing second faces (12b) of said main body (12) extending below said bottom wall (18a), and
wherein the main body (12) further has a plurality of diffuser channels (28) communicating with said at least two inlet conduits (24) and flowing at said bottom wall (18a) to diffuse into said chamber (18) the electrolyte fed to the cell (10) through said at least two inlet conduits (24).

2. Cell according to claim 1, wherein said bottom wall (18a) is substantially flat and extends horizontally.

3. Cell according to claim 1 or 2, wherein said at least two inlet conduits (24) extend parallel to said bottom wall (18a).

4. Cell according to any one of the preceding claims, wherein the main body (12) has a general conformation of a substantially parallelepiped shape, wherein said first opposing faces (12a) are substantially flat and parallel to each other, and wherein said second opposing faces (12b) are also substantially flat and parallel to each other.

5. Cell according to any one of the preceding claims, further comprising a layer (20) of spheres of inert material, in particular zirconia, disposed on said bottom wall (18a).

6. Cell according to any one of the preceding claims, wherein the main body (12) has a manifold (26) which is arranged below said bottom wall (18a) and is in fluid communication on one side with said at least two inlet conduits (24) and on the other side with said diffuser channels (28).

7. Cell according to any one of the preceding claims, wherein said diffuser channels (28) have diameters different from each other.

8. Cell according to claim 7, wherein said diffuser channels (28) located in a central area of said bottom wall (18a) have diameters varying in the direction of the length of said bottom wall (18a).

9. Cell according to any one of the preceding claims, wherein the main body (12), the anode plate (14) and the cathode plate (16) have a plurality of through holes (32) aligned with each other, through which mechanical fastening members, in particular screw-type members (34), are insertable for fastening the anode plate (14) and the cathode plate (16) to the main body (12).

10. Cell according to any one of the preceding claims, further comprising feeding means for feeding the electrolyte into said chamber (18) through said at least two inlet conduits (24), said feeding means being configured to regulate the flow rate of the flow of electrolyte so as to make the fluid bed boiling, i.e. capable of continuously stirring, due to the presence of swirling motions within said chamber (18), the zinc particles.

11. A fuel cell pack comprising a plurality of cells (10) according to any one of the preceding claims, wherein the cells (10) are arranged in groups of two, and wherein each group of two cells (10) comprises a single anode plate (14) common to the two cells (10).

12. Cell pack according to claim 11, wherein between the cathode plate (16) of a cell (10) of a first group of two cells (10) and the adjacent cathode plate (16) of a cell of a second group of two cells (10) adjacent to said first group of two cells (10) an air channel (36) is provided.

## Patentansprüche

1. Zink-Luft-Brennstoffzelle der Wirbelschichtart, umfassend einen Hauptkörper (12) und ein Paar von Elektrodenplatten (14, 16), Anode beziehungsweise Kathode, die an einem Paar von gegenüberliegenden erster Flächen (12a) des Hauptkörpers (12) fixiert sind,
wobei der Hauptkörper (12) eine Kammer (18) umschließt, die geeignet ist, dass ein Elektrolyt und Zinkpartikel zugeführt werden, wobei die Kammer (18) eine Bodenwand (18a) aufweist
wobei der Hauptkörper (12) mit mindestens einer Zufuhrleitung (22) zum Zuführen der Zinkpartikel zu der Zelle (10), mindestens zwei Einlassleitungen (24) zum Zuführen des Elektrolyten zu der Zelle (10) und mindestens einer Abführleitung (30) zum Abführen des Elektrolyten und der Zinkpartikel aus der Zelle (10), die während des Betriebs der Zelle (10) verbraucht werden, versehen ist,
wobei die mindestens zwei Einlassleitungen (24) koaxial zueinander auf einem Paar von gegenüberliegenden zweiten Flächen (12b) des Hauptkörpers (12) angeordnet sind, die sich unterhalb der Bodenwand (18a) erstrecken, und
wobei der Hauptkörper (12) ferner eine Vielzahl von Diffusorkanälen (28) aufweist, die mit den mindestens zwei Einlassleitungen (24) in Verbindung stehen und an der Bodenwand (18a) münden, um den Elektrolyt in die Kammer (18) zu diffundieren, der der Zelle (10) durch die mindestens zwei Einlassleitungen (24) zugeführt wird.

2. Zelle nach Anspruch 1, wobei die Bodenwand (18a) im Wesentlichen flach ist und sich horizontal erstreckt.

3. Zelle nach Anspruch 1 oder 2, wobei sich die mindestens zwei Einlassleitungen (24) parallel zu der Bodenwand (18a) erstrecken.

4. Zelle nach einem der vorstehenden Ansprüche, wobei der Hauptkörper (12) eine allgemeine Gestalt aufweist, die im Wesentlichen eine parallelepipedische Form ist, wobei die ersten gegenüberliegenden Flächen (12a) im Wesentlichen flach und parallel zueinander sind und wobei die zweiten gegenüberliegenden Flächen (12b) ebenfalls im Wesentlichen flach und parallel zueinander sind.

5. Zelle nach einem der vorstehenden Ansprüche, ferner umfassend eine Schicht (20) aus Kugeln aus inertem Material, insbesondere Zirkonoxid, die auf der Bodenwand (18a) eingerichtet ist.

6. Zelle nach einem der vorstehenden Ansprüche, wobei der Hauptkörper (12) einen Verteiler (26) aufweist, der unterhalb der Bodenwand (18a) angeordnet ist und auf der einen Seite mit den mindestens zwei Einlassleitungen (24) und auf der anderen Seite mit den Diffusorkanälen (28) in Fluidverbindung steht.

7. Zelle nach einem der vorstehenden Ansprüche, wobei die Diffusorkanäle (28) Durchmesser aufweisen, die sich voneinander unterscheiden.

8. Zelle nach Anspruch 7, wobei die Diffusorkanäle (28), die sich in einem zentralen Bereich der Bodenwand (18a) befinden, Durchmesser aufweisen, die in der Längenrichtung der Bodenwand (18a) variieren.

9. Zelle nach einem der vorstehenden Ansprüche, wobei der Hauptkörper (12), die Anodenplatte (14) und die Kathodenplatte (16) eine Vielzahl von miteinander ausgerichteten Durchgangslöchern (32) aufweisen, durch die mechanische Befestigungselemente, insbesondere schraubenartige Elemente (34), zum Befestigen der Anodenplatte (14) und der Kathodenplatte (16) an dem Hauptkörper (12) einführbar sind.

10. Zelle nach einem der vorstehenden Ansprüche, ferner umfassend ein Zuführmittel zum Zuführen des Elektrolyten in die Kammer (18) durch die mindestens zwei Einlassleitungen (24), wobei die Zuführeinrichtung konfiguriert ist, um die Strömungsrate des Elektrolytstroms zu regulieren, um das Fluidbett zum Sieden zu bringen, d. h., dass es aufgrund der vorhandenen Wirbelbewegungen innerhalb der Kammer (18) in der Lage ist, die Zinkpartikel kontinuierlich zu verrühren.

11. Brennstoffzellenpaket, umfassend eine Vielzahl von Zellen (10) nach einem der vorstehenden Ansprüche, wobei die Zellen (10) in Zweiergruppen angeordnet sind und wobei jede Gruppe aus zwei Zellen (10) eine einzige, den beiden Zellen (10) gemeinsame Anodenplatte (14) umfasst.

12. Zellenpaket nach Anspruch 11, wobei zwischen der Kathodenplatte (16) einer Zelle (10) einer ersten Gruppe von zwei Zellen (10) und der angrenzenden Kathodenplatte (16) einer Zelle einer zweiten Gruppe von zwei Zellen (10), die an die erste Gruppe von zwei Zellen (10) angrenzt, ein Luftkanal (36) bereitgestellt ist.

## Revendications

1. Pile à combustible zinc-air du type lit fluidisé, comprenant un corps principal (12) et une paire de plaques d'électrode (14, 16), anode et cathode respectivement, fixées à une paire de premières faces opposées (12a) du corps principal (12),
dans laquelle le corps principal (12) ceint une chambre (18) appropriée pour être alimentée avec un électrolyte et avec des particules de zinc, ladite chambre (18) ayant une paroi inférieure (18a)
dans laquelle le corps principal (12) est pourvu d'au moins un conduit d'alimentation (22) permettant d'alimenter les particules de zinc à la pile (10), d'au moins deux conduits d'entrée (24) permettant d'alimenter l'électrolyte à la pile (10), et d'au moins un conduit de décharge (30) permettant de décharger de la pile (10) l'électrolyte et les particules de zinc consommées pendant le fonctionnement de la pile (10),
dans laquelle lesdits au moins deux conduits d'entrée (24) sont agencés coaxialement les uns par rapport aux autres sur une paire de secondes faces (12b) opposées dudit corps principal (12) s'étendant en dessous de ladite paroi inférieure (18a), et
dans laquelle le corps principal (12) a en outre une pluralité de canaux de diffuseur (28) communiquant avec lesdits au moins deux conduits d'entrée (24) et circulant au niveau de ladite paroi inférieure (18a) pour diffuser dans ladite chambre (18) l'électrolyte alimenté à la pile (10) à travers lesdits au moins deux conduits d'entrée (24).

2. Pile selon la revendication 1, dans laquelle ladite paroi inférieure (18a) est sensiblement plate et s'étend horizontalement.

3. Pile selon la revendication 1 ou 2, dans laquelle lesdits au moins deux conduits d'entrée (24) s'étendent parallèles à ladite paroi inférieure (18a).

4. Pile selon l'une quelconque des revendications précédentes, dans laquelle le corps principal (12) a une conformation générale d'une forme sensiblement parallélépipédique, dans laquelle lesdites premières faces opposées (12a) sont sensiblement plates et parallèles l'une à l'autre, et dans laquelle lesdites secondes faces opposées (12b) sont également sensiblement plates et parallèles l'une à l'autre.

5. Pile selon l'une quelconque des revendications précédentes, comprenant en outre une couche (20) de sphères de matériau inerte, en particulier de zircone, disposée sur ladite paroi inférieure (18a).

6. Pile selon l'une quelconque des revendications précédentes, dans laquelle le corps principal (12) a un collecteur (26) qui est agencé en dessous de ladite paroi inférieure (18a) et est en communication fluidique sur un côté avec lesdits au moins deux conduits d'entrée (24) et sur l'autre côté avec lesdits canaux de diffuseur (28).

7. Pile selon l'une quelconque des revendications précédentes, dans laquelle lesdits canaux de diffuseur (28) ont des diamètres différents les uns des autres.

8. Pile selon la revendication 7, dans laquelle lesdits canaux de diffuseur (28) localisés dans une zone centrale de ladite paroi inférieure (18a) ont des diamètres variant dans la direction de la longueur de ladite paroi inférieure (18a).

9. Pile selon l'une quelconque des revendications précédentes, dans laquelle le corps principal (12), la plaque d'anode (14) et la plaque de cathode (16) ont une pluralité de trous traversants (32) alignés les uns avec les autres, à travers lesquels des éléments de fixation mécanique, en particulier des éléments de type vis (34), peuvent être insérés pour la fixation de la plaque d'anode (14) et de la plaque de cathode (16) au corps principal (12).

10. Pile selon l'une quelconque des revendications précédentes, comprenant en outre des moyens d'alimentation permettant d'alimenter l'électrolyte dans ladite chambre (18) à travers lesdits au moins deux conduits d'entrée (24), lesdits moyens d'alimentation étant conçus pour réguler le débit d'écoulement de l'écoulement d'électrolyte de façon à mettre le lit fluidisé en ébullition, c'est-à-dire capables d'agiter en continu, en raison de la présence de mouvement de tourbillonnement au sein de ladite chambre (18), les particules de zinc.

11. Bloc pile à combustible comprenant une pluralité de piles (10) selon l'une quelconque des revendications précédentes, dans lequel les piles (10) sont agencées en groupes de deux, et dans lequel chaque groupe de deux piles (10) comprend une unique plaque d'anode (14) commune aux deux piles (10).

12. Bloc pile selon la revendication 11, dans lequel entre la plaque de cathode (16) d'une pile (10) d'un premier groupe de deux piles (10) et la plaque de cathode (16) adjacente d'une pile d'un second groupe de deux piles (10) adjacent audit premier groupe de deux piles (10) un canal d'air (36) est fourni.
